# EUROPEAN PATENT APPLICATION

(11) **EP 2 876 939 A1**
(43) Date of publication of application: **27.05.2015**
(21) Application number: 13819439.4
(22) Date of filing: 06.06.2013
(51) Int. Cl.: H04W 48/10, H04W 48/18, H04W 68/12

(54) **BASE STATION AND CONTROL METHOD IN MOBILE COMMUNICATIONS SYSTEM**

(30) Priority: 17.07.2012 JP 2012158886
(71) Applicant: NTT DOCOMO, INC., Chiyoda-ku Tokyo 100-6150 (JP)
(72) Inventor: AOYAGI, Kenichiro, Tokyo 100-6150 (JP); HAPSARI, Wuri Andarmawanti, Tokyo 100-6150 (JP); KIYOSHIMA, Kohei, Tokyo 100-6150 (JP); UCHINO, Tooru, Tokyo 100-6150 (JP)
(74) Representative: Hoffmann Eitle
(86) International application number: PCT/JP2013/065664
(87) International publication number: WO 2014/013810

(57) **Abstract**

A base station includes a voice coding method identification unit configured to identify whether a CSFB method in which a voice signal of user equipment is provided in a 3G cell or a VoLTE method in which a voice signal of the user equipment is provided in an LTE cell is used; a mode manager configured to control an operation mode of the user equipment, so that the user equipment that provides the voice signal by the VoLTE method tends to stay in the active mode compared to the user equipment that provides the voice signal by the CSFB method; and a transmitter configured to transmit a notification signal that indicates that communications of the user equipment in the idle mode are to be restricted.

## Description

### TECHNICAL FIELD

The disclosed invention relates to a base station and a control method in a communications system.

### BACKGROUND ART

In a communications system, when a communication node, such as a base station and/or a switching center, is congested, or when a communication node is gradually congested, communications to be executed by user equipment can be restricted. For a case of a long term evolution (LTE) mobile communications system or an E-UTRAN mobile communications system, two types of restriction methods are provided, which are Service Specific Access Control (SSAC) whose target of restriction is a voice signal, and Access Class Barring (ACB) whose targets of restriction are a voice signal and a data signal. Restrictions are described in Non-Patent Documents 1 - 3, for example.

### RELATED ART DOCUMENT

### [NON-PATENT DOCUMENT]

[NON-PATENT DOCUMENT 1] 3GPP 36.304, 5.3.3 Emergency call
[NON-PATENT DOCUMENT 2] 3GPP 36.331, 5.3.3 RRC connection establishment, 5.3.3.2 Initiation, 5.3.3.10 Handling of SSAC related parameters
[NON-PATENT DOCUMENT 3] 3GPP 24.301, 5.6.1.6 Abnormal class in the UE

### SUMMARY OF THE INVENTION

### PROBLEM TO BE SOLVED BY THE INVENTION

There are two services for communicating voice signals. One is a Circuit Switching Fall Back (CSFB) method in which user equipment transitions from an LTE cell to a 3G cell, and voice signals are transmitted and received in the 3G cell. The other is a Voice over LTE (VoLTE) method in which voice signals are transmitted and received in an LTE cell while user equipment is served by the LTE cell. Usually, user equipment that supports voice may be required to include a function that operates in the CSFB method, however, the user equipment may not be required to include a function that operates in the VoLTE method. Namely, the CSFB function is mandatory, and the VoLTE function is optional. In a NW, a determination may be made as to whether the CSFB method is to be used or the VoLTE method is to be used, based on a determination of capability of user equipment.

Suppose that, in an LTE cell, an ACB restriction is invoked whose targets of restriction are both data signals and voice signals. In this case, user equipment that uses the VoLTE method becomes the target of the ACB restriction. Consequently, the user equipment that uses the VoLTE method may be disallowed to originate a voice signal, and the user equipment stays in the LTE cell. User equipment that uses the CSFB method may also be disallowed to originate a voice signal of the LTE scheme in the LTE cell. However, the user equipment that uses the CSFB method may autonomously transition to a 3G cell. After the transition, when the 3G cell is not restricted, the user equipment may transmit and receive voice signals in the 3G cell that is the destination of the transition. Namely, when the ACB restriction is invoked in the LTE cell, data signals become the targets of the restriction, and user equipment that uses the VoLTE method may be disallowed to transmit and receive voice signals. However, at the same time, user equipment that uses the CSFB method is allowed to transmit and receive voice signals in the 3G cell. Such a situation may not be preferable from the perspective of fairness, or the like.

With the diversification of the applications that run on recent communication terminals (especially, highly-functional information terminals), various types of information are transmitted from a communication terminal as data signals. Since such data signals are increasing more than ever, there are many situations in which data signals are to be restricted. For a case of related art, when the ACB restriction is invoked, a voice signal user may become a target of restriction. Accordingly, a situation may not be achieved in which data signals are the targets of restriction, but voice signals are not the targets of restriction.

It is desirable that, in an LTE mobile communications system, a situation can be easily achieved in which data signals are the targets of restriction, but voice signals are not the targets of restriction.

### MEANS FOR SOLVING THE PROBLEM

According to an embodiment of the disclosed invention, there is provided a base station of an LTE mobile communications system including a voice coding method identification unit configured to identify whether a CSFB method in which a voice signal of user equipment is provided in a 3G cell or a VoLTE method in which a voice signal of the user equipment is provided in an LTE cell is used; a mode manager configured to control an operation mode of the user equipment, and configured to transmit a mode transition signal for transitioning the operation mode to the user equipment, wherein, when the operation mode of the user equipment that is an active mode or an idle mode is to be controlled, the mode manager is configured to control the operation mode of the user equipment, so that the user equipment that provides the voice signal by the VoLTE method tends to stay in the active mode compared to the user equipment that provides the voice signal by the CSFB method; and a transmitter configured to transmit a notification signal that indicates that communications of the user equipment in the idle mode are to be restricted.

Further, according to an embodiment of the disclosed invention, there is provided a control method to be executed by a base station of an LTE mobile communications system, wherein the control method includes a step of identifying whether a CSFB method in which a voice signal of user equipment is communicated in a 3G cell or a VoLTE method in which a voice signal of the user equipment is communicated in an LTE cell is used; a step of controlling an operation mode of the user equipment and transmitting a mode transition signal for transitioning the operation mode to the user equipment, wherein, when the operation mode of the user equipment that is an active mode or an idle mode is to be controlled, the operation mode of the user equipment is controlled, so that the user equipment that communicates the voice signal by the VoLTE method tends to stay in the active mode compared to the user equipment that communicates the voice signal by the CSFB method; and a step of transmitting a notification signal that indicates that communications of the user equipment in the idle mode are to be restricted.

### EFFECT OF THE PRESENT INVENTION

According to an embodiment of the disclosed invention, in an LTE mobile communications system, a situation can be easily achieved in which data signals are the targets of restriction, but voice signals are not the targets of restriction.

### BRIEF DESCRIPTION OF THE DRAWINGS

FIG. 1 is a diagram showing a relationship between an operation mode and a restriction method;
FIG. 2 is a functional block diagram of a base station that is used in an embodiment;
FIG. 3 is a sequence diagram showing an example operation during attach;
FIG. 4 is a sequence diagram showing an example operation after the attach; and
FIG. 5 is a diagram showing a state such that three logical paths are established as a U-plane among user equipment (UE), a base station (eNB), and a mobility management entity (MME).

### EMBODIMENTS FOR CARRYING OUT THE INVENTION

Hereinafter, an embodiment is explained from the following perspectives by referring to the accompanying drawings. In the drawings, the same reference numeral or reference symbol may be attached to similar elements.
1. Operation mode
2. Base station
3. Operation example
4. Modified example

The separations of the items are not essential to the present invention. Depending on necessity, subject matter described in two or more items may be combined and used, and subject matter described in an item may be applied to subject matter described in another item (provided that they do not contradict).

### <1. Operation mode>

User equipment may operate in an operation mode. The operation mode is an active mode or an idle mode. In the active mode, an RRC connection is established between the user equipment and a base station, and an S1 connection is established between the base station and a mobility management entity. In the idle mode, neither an RRC connection nor an S1 connection is established, and reception of a control signal is attempted discontinuously or periodically. When the user equipment in the idle mode attempts to originate or receive a call, first an RRC connection and an S1 connection are to be established, and then radio resources are to be allocated.

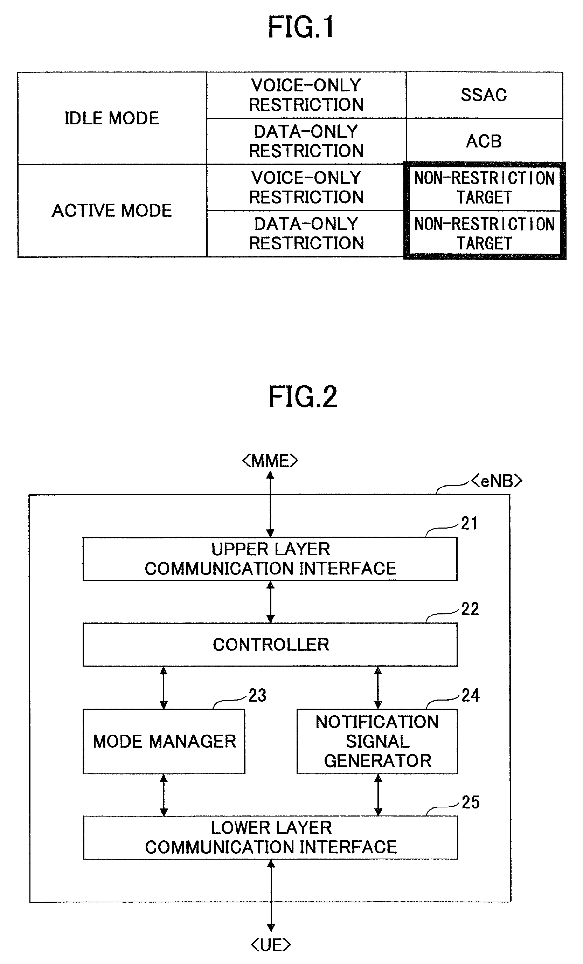

FIG. 1 shows a relationship between an operation mode and a restriction method. As depicted, when restriction of voice signals is to be exclusively executed (voice-only restriction) for the user equipment in the idle mode, the Service Specific Access Control (SSAC) is to be invoked. Further, when restriction of data signals is to be exclusively executed (data-only restriction) for the user equipment in the idle mode, the Access Class Barring (ACB) is to be invoked. When the ACB restriction is invoked in an LTE cell, data signals become the targets of restriction, and additionally user equipment that uses the VoLTE method is disallowed to transmit and receive voice signals. However, at the same time, in a 3G cell, user equipment that uses the CSFB method is allowed to transmit and receive voice signals. In this manner, if the ACB restriction is invoked for user equipment in the idle mode, a situation may occur that is adverse from the perspective of fairness among users.

In the LTE scheme, user equipment in the active mode is not a target of the SSAC and the ACB. The embodiment of the disclosed invention focuses on this point, and causes the user equipment that uses the VoLTE method to stay in the active mode as much as possible. Suppose that the user equipment that uses the VoLTE method is always in the active mode, and that the ACB restriction is invoked. In this case, data signals of the user equipment in the idle mode certainly become the targets of restriction, and the user equipment that uses the CSFB method transitions to a 3G cell and the user equipment is allowed to transmit and receive voice signals. Further, since the user equipment that uses the VoLTE is in the active mode, the user equipment that uses the VoLTE does not become the target of the ACB restriction, and the user equipment that uses the VoLTE may be allowed to transmit and receive voice signals. When the operation mode is maintained so that the operation mode tends not to become the idle mode, even if the user equipment that uses the VoLTE method is not always in the active mode, voice signals of the user equipment that uses the VoLTE method tend not become the targets of the ACB restriction. Consequently, both the user equipment that uses the CSFB method and the user equipment that uses the VoLTE method may be allowed to transmit and receive voice signals. At the same time, it becomes easier to achieve a situation in which data signals are restricted.

### <2. Base station>

FIG. 2 shows a functional block diagram of a base station (eNB) that is used in the embodiment. FIG. 2 exemplifies elements that are particularly relevant to the embodiment among various processors or functional units that are included in the base station (eNB). The base station (eNB) and the mobility management entity (MME) constitute a network apparatus. The base station (eNB) includes, at least, an upper layer communication interface 21; a controller 22; a mode manager 23; a notification signal generator 24; and a lower layer communication interface 25.

The upper layer communication interface 21 is for executing communications between the base station (eNB) and the mobility management entity (MME) through the S1 interface. For example, the upper layer communication interface 21 may receive a voice service identification signal that indicates whether the CSFB method is used or the VoLTE method is used from the mobility management entity. Here, in the CSFB method, voice signals of the user equipment are transmitted and received in a 3G cell. In the VoLTE method, voice signals of the user equipment are transmitted and received in an LTE cell. The voice service identification signal is determined by the mobility management entity based on capability information of the user equipment.

The controller 22 is for controlling operations of various processors and functional units that are included in the base station (eNB).

The mode manager 23 is for controlling an operation mode of each user equipment. As described above, the operation mode is the active mode or the idle mode. The operation mode may properly be updated. Switching of the operation mode is executed by transmitting a mode transition signal from the base station (eNB) to each user equipment (UE). The mode transition may be managed by using a timer. For example, after completing transmission and reception of traffic data of user equipment (UE), when a predetermined time period that is defined by a preservation timer is expired, the operation mode of the user equipment (UE) may transition from the active mode to the idle mode. Similarly, when call origination or reception occurs for user equipment (UE) in the idle mode, the operation mode of the user equipment (UE) transitions from the idle mode to the active mode.

The mode manager 23 manages an operation mode of user equipment, so that the user equipment that transmits and receives voice signals by the VoLTE method tends to stay in the active mode compared to the user equipment that transmits and receives voice signals by the CSFB method. Then, a mode transition signal for transitioning the operation mode is transmitted to the user equipment. For example, a preservation time period of the user equipment that uses the VoLTE method (e.g., 240 seconds) is defined to be greater than a preservation time period of the user equipment that uses the CSFB method (e.g., 120 seconds). Alternatively, the user equipment that uses the VoLTE method may always operate in the active mode, without transitioning to the idle mode. Further, when a network is congested, the mode manager 23 may cause the user equipment that uses the CSFB method and for which a time period that is elapsed without transmitting and receiving traffic data is greater than a predetermined value to transition to the idle mode.

The notification signal generator 24 is for generating a notification signal to be transmitted to the user equipment that is served by the cell. The notification signal includes various types of control information. In particular, the notification signal may include restriction information that indicates whether or not a restriction, such as the SSAC or the ACB, is invoked.

The lower layer communication interface 25 is for executing radio communication with user equipment (UE). For example, the lower layer communication interface 25 may transmit a mode transition signal to the user equipment (UE) whose operation mode is switched. In addition, the lower layer communication interface 25 may transmit a notification signal to the user equipment (UE).

### <3. Operation example>

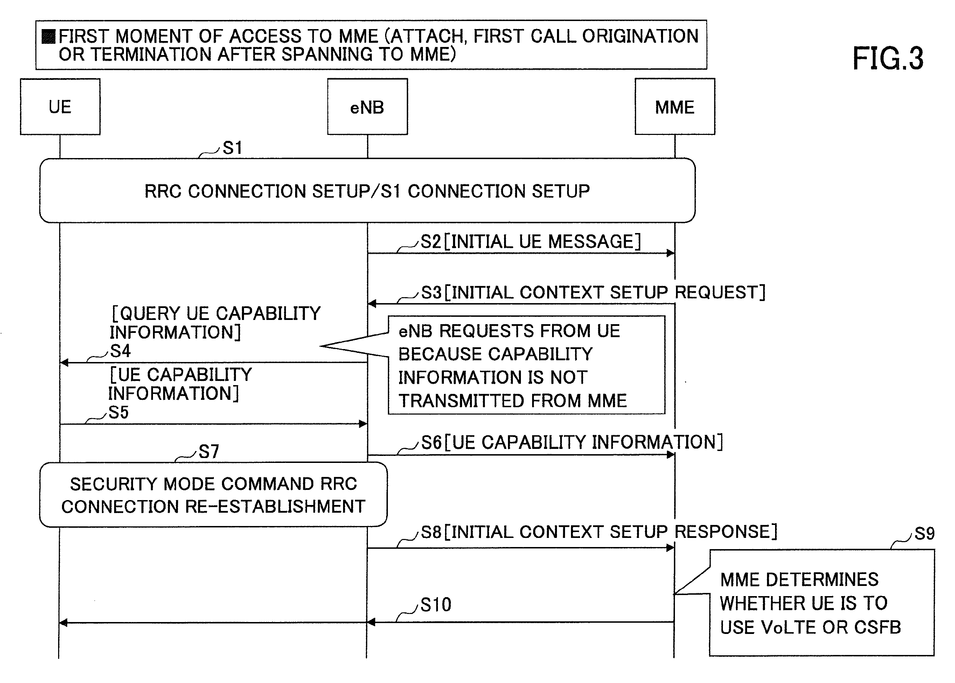

FIG. 3 shows an example operation during an attach moment that is executed in the LTE mobile communications system that includes the base station (eNB) shown in FIG. 2.

At step S1, an RRC connection is established between the user equipment (UE) and the base station (eNB) (RRC connection setup), and an S1 connection is established between the base station (eNB) and the mobility management entity (MME).

At step S2, the base station (eNB) transmits a signal that is indicated as "Initial UE Message" to the mobility management entity (Mobility Management Entity: MME). This signal is for an initial access from the user equipment (UE) to the mobility management entity (MME). Thus, the mobility management entity (MME) is not yet holding capability information of the user equipment (UE). The capability information may include category information of the user equipment (UE), information about a frequency band with which the user equipment (UE) can execute communications, security information, handover processing capability, and the like. The capability information may be used for controlling by the base station (eNB), by the mobility management entity (MME), and the like.

At step S3, the mobility management entity (MME) transmits a signal that is indicated as "Initial Context Setup Request" to the base station (eNB).

At step S4, the base station (eNB) queries the user equipment (UE) for the capability information (UE-Capability). At step S5, the base station (eNB) receives the capability information (UE-Capability), and stores it.

At step S6, the mobility management entity (MME) receives the capability information from the base station (eNB), and stores it.

At step S7, security processing and reestablishment of the RRC connection are executed.

At step S8, the base station (eNB) transmits a call setting completion signal that is indicated as "Initial Context Setup Response" to the mobility management entity (MME).

At step S9, the mobility management entity (MME) determines, when the user equipment (UE) is to communicate voice signals, whether the VoLTE method is to be used or the CSFB method is to be used, based on the capability information of the user equipment (UE) that executes the attach procedure. At step S2, the user equipment (UE) may communicate a desired method that is one of the VoLTE method and the CSFB method to the mobility management entity (MME). However, the mobility management entity (MME) determines a truly adequate voice signal communication method (the VoLTE or the CSFB) for the user equipment (UE) based on the capability information of the user equipment (UE). For example, even if the user equipment (UE) includes the VoLTE function, when the LTE cell is relatively congested but the 3G cell is not congested, it is desirable that the user equipment (UE) communicates voice signals by the CSFB method, from the perspective of resource utilization efficiency and reducing standby time.

At step S10, the mobility management entity (MME) communicates the voice signal communication method (the VoLTE or the CSFB) that is to be used by the user equipment (UE) to the base station (eNB) and to the user equipment (UE).

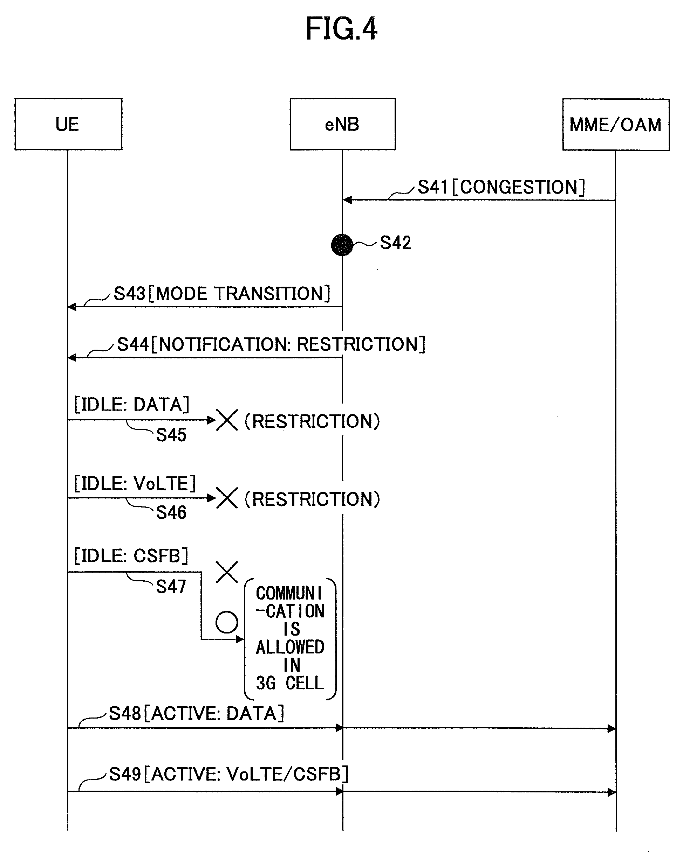

FIG. 4 shows an example operation after completing the processes shown in FIG. 3.

At step S41, the mobility management entity (MME) or an administration node (OAM) communicates to the base station (eNB) that a restriction is to be invoked. For example, the mobility management entity (MME) may communicate, by an overload indicator, the invocation of the restriction to the base station (eNB). Alternatively, the administration node (OAM) executing inspection and maintenance of the network may communicate the invocation of the restriction to the base station (eNB) by some indication signal. As described above, the types of the restriction may include the restriction methods such as the SSAC or the ACB, and the type of the restriction is communicated to the base station (eNB). For convenience of the explanation, suppose that the ACB restriction is invoked.

At step S42, the base station (eNB) determines whether transmission and reception of voice signals in accordance with the VoLTE method become the targets of restriction of the invoked restriction. As in the ACB restriction of the present example, when transmission and reception of voice signals in accordance with the VoLTE method are the targets of restriction, the base station (eNB) controls an operation mode of user equipment, so that the user equipment that uses the VoLTE method tends to stay in the active mode compared to the user equipment that uses the CSFB method. For example, a preservation time period of user equipment that uses the VoLTE method (e.g., 240 seconds) is set to be greater than a preservation time period of user equipment that uses the CSFB method (120 seconds). The mode transition signal for the operation mode is transmitted from the base station (eNB) to the user equipment (UE) at step S43. For simplicity of illustration, the mode transition signal is transmitted only once at step S43. However, mode transition of the operation mode may be executed at any desirable timing between the base station (eNB) and the user equipment (UE). For user equipment (UE) that uses the VoLTE method and user equipment (UE) that uses the CSFB method, preservation time periods for transitioning from the active mode to the idle mode are set to be different values. Therefore, the user equipment (UE) that uses the VoLTE method tends to stay longer in the active mode, while the user equipment (UE) that uses the CSFB method tends to transition to the idle mode quickly.

Here, from the perspective of facilitating that the user equipment that uses the VoLTE method tends to stay in the active mode compared to the user equipment that uses the CSFB method, the user equipment that uses the VoLTE method may be caused to always operate in the active mode without transitioning to the idle mode. Further, when the network is congested, the mode manager may cause the user equipment that uses the CSFB method and for which a time period that is elapsed without transmitting and receiving traffic data is greater than a predetermined value to transition to the idle mode.

However, as in the SSAC restriction, when transmission and reception of voice signals in accordance with the VoLTE method are not the targets of restriction at step S42, operation modes of both the user equipment that uses the VoLTE method and the user equipment that uses the CSFB method are controlled in a similar manner.

At step S44, the base station sends a notification signal that indicates that the restriction is invoked to user equipment (UE) in the cell. For the present example, the fact that the ACB restriction is invoked is informed. As described above, in the ACB restriction, for the user equipment (UE) in the idle mode, both the voice signal and the data signal are the targets of restriction. However, the user equipment (UE) in the active mode is outside the scope of the restriction. For this embodiment, since the user equipment (UE) that uses the VoLTE method tends to stay in the active mode, the user equipment (UE) that uses the VoLTE method tends to be outside the scope of the restriction. The operation mode of the user equipment (UE) that uses the CSFB method is managed as in the past. However, even if the user equipment (UE) that uses the CSFB method corresponds to the target of restriction in the idle mode, the user equipment can transition to a 3G cell and communicate voice signals. Consequently, as depicted, data signals of the user equipment (UE) in the idle mode are restricted (step S45), and voice signals of the user equipment (UE) that uses the VoLTE method and that is in the idle mode are restricted (step S46). However, voice signals of the user equipment (UE) that uses the CSFB method and that is in the idle mode can be communicated after transitioning to the 3G cell (step S47). For the user equipment that is in the active mode, both the data signal and the voice signal (the VoLTE or the CSFB) are outside the scope of the restriction, so that both the data signal and the voice signal can be communicated (steps S48 and S49). According to the embodiment, by making it not so easy for the user equipment that uses the VoLTE method to transition to the idle mode, the likelihood of the situation of step S46 is reduced, thereby achieving a situation in which only data signals are restricted.

### <4. Modified example>

For the example shown in FIG. 4, the operation for making it not so easy for the user equipment (UE) that uses the VoLTE method to transition to the idle mode (e.g., extending the preservation timer) is started after step S41 (at step S42). However, the disclosed invention is not limited to such an example. For example, the operation for making it not so easy for the user equipment (UE) that uses the VoLTE method to transition to the idle mode can be kept executing. However, from the perspective of battery saving and the like of the user equipment (UE), it may be not desirable to keep executing the operation because the user equipment (UE) that uses the VoLTE method may not transition to the idle mode. Thus, from the perspective of communicating voice signals by the VoLTE and saving the battery, the operation for making it not so easy for the user equipment (UE) that uses the VoLTE method to transition to the idle mode may preferably be executed in accordance with an instruction from the mobility management entity (MME) or the administration node (OAM), as shown in FIG. 4.

At step S9 of FIG. 3, the mobility management entity (MME) determines whether the user equipment (UE) is to use the VoLTE method or the CSFB method. However, the moment at which the mobility management entity (MME) determines it is not limited to the timing of step S9. For example, a determination may be made at a moment at which a logical path is established for the user equipment (UE) and the mobility management entity (MME).

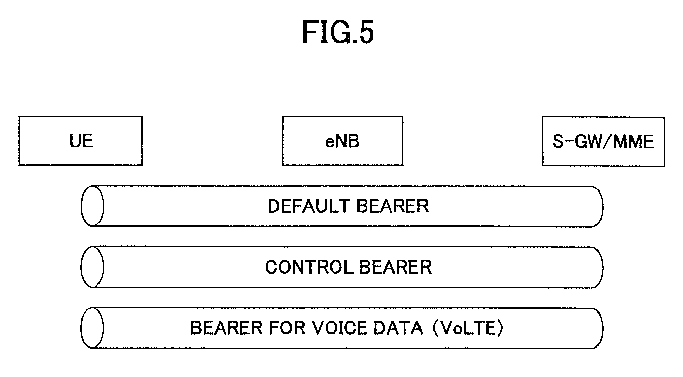

FIG. 5 shows a situation in which three logical paths are established as a U-plane among the user equipment (UE), the base station (eNB) and the mobility management entity (MME). In the figure, the default bearer is the RRC connection that is the most basic logical path among three logical paths. The control bearer is a bearer of the U-plane. Through the control bearer, a request for setting a bearer for voice data and IMS signaling are transmitted and received. The bearer for the voice data is not always established. The bearer for the voice data is established only if the voice signals by the VoLTE are transmitted and/or received. Accordingly, the default bearer and the control bearer are the bearers that are established regardless of whether voice signals are present or absent. Therefore, it can be determined whether the user equipment (UE) transmits and/or receives voice signals by the VoLTE based on whether the bearer for the voice data is established or not. Namely, the mobility management entity (MME) may determine whether the user equipment (UE) is to use the VoLTE or the CSFB based on the setting condition of the logical path.

The base station and the control method in the communications system are explained above by the embodiment such that the ACB restriction is executed in the LTE communications system. However, the present invention is not limited to the above-described embodiment, and various modifications and improvements can be made within the scope of the present invention. For example, the disclosed embodiment may be applied to any suitable mobile communications system in which voice signals by the VoLTE are communicated while data signals are restricted. Specific examples of numerical values are used in order to facilitate understanding of the invention. However, these numerical values are simply illustrative, and any other appropriate values may be used, except as indicated otherwise. The separations of the items in the above explanation are not essential to the present invention. Depending on necessity, subject matter described in two or more items may be combined and used, and subject matter described in an item may be applied to subject matter described in another item (provided that they do not contradict). A boundary of a functional unit or a processor in the functional block diagrams may not necessarily correspond to a boundary of a physical component.
An operation by a plurality of functional units may be physically executed by a single component, or an operation of a single functional unit may be physically executed by a plurality of components. For the convenience of explanation, the communication terminal and the information processing device are explained by using the functional block diagrams. However, these devices may be implemented in hardware, software, or combinations thereof. The software that operates in accordance with the present invention may be prepared in any appropriate storage medium, such as a random access memory (RAM), a flash memory, a read-only memory (ROM), an EPROM, an EEPROM, a register, a hard disk drive (HDD), a removable disk, a CD-ROM, a database, a server, and the like.

The present application is based on and claims the benefit of priority of Japanese Patent Application No. 2012-158886, filed on July 17, 2012, the entire contents of Japanese Patent Application No. 2012-158886 are hereby incorporated by reference.

### LIST OF REFERENCE SYMBOLS

21: Upper layer communication interface
22: Controller
23: Mode manager
24: Notification signal generator
25: Lower layer communication interface

## Claims

1. A base station of an LTE mobile communications system comprising:
a voice coding method identification unit configured to identify whether a CSFB method in which a voice signal of user equipment is provided in a 3G cell or a VoLTE method in which a voice signal of the user equipment is provided in an LTE cell is used;
a mode manager configured to control an operation mode of the user equipment, and configured to transmit a mode transition signal for transitioning the operation mode to the user equipment, wherein, when the operation mode of the user equipment that is an active mode or an idle mode is to be controlled, the mode manager is configured to control the operation mode of the user equipment, so that the user equipment that provides the voice signal by the VoLTE method tends to stay in the active mode compared to the user equipment that provides the voice signal by the CSFB method; and
a transmitter configured to transmit a notification signal that indicates that communications of the user equipment in the idle mode are to be restricted.

2. The base station according to claim 1,
wherein, when a predetermined time period is elapsed without transmitting and receiving traffic data of the user equipment, the mode manager is configured to transmit, to the user equipment, the mode transition signal for transitioning the operation mode of the user equipment from the active mode to the idle mode; and
wherein the predetermined time period for the user equipment that uses the VoLTE method is set to be greater than the predetermined time period for the user equipment that uses the CSFB method.

3. The base station according to claim 1,
a voice service identification signal is determined by a mobility management entity based on capability information of the user equipment.

4. The base station according to claim 1,
wherein, when congestion of the base station, a mobility management entity, or a communication system is detected, the mode manager is configured to transmit a mode transition signal for transitioning the operation mode from the active mode to the idle mode to user equipment that uses the CSFB method and for which a time period that is elapsed without communicating traffic data is greater than a predetermined value.

5. The base station according to claim 1,
wherein, when the base station is congested, the base station is configured to receive a voice service identification signal from a mobility management entity.

6. A control method to be executed by a base station of an LTE mobile communications system, the control method comprising:
a step of identifying whether a CSFB method in which a voice signal of user equipment is communicated in a 3G cell or a VoLTE method in which a voice signal of the user equipment is communicated in an LTE cell is used;
a step of controlling an operation mode of the user equipment and transmitting a mode transition signal for transitioning the operation mode to the user equipment, wherein, when the operation mode of the user equipment that is an active mode or an idle mode is to be controlled, the operation mode of the user equipment is controlled, so that the user equipment that communicates the voice signal by the VoLTE method tends to stay in the active mode compared to the user equipment that communicates the voice signal by the CSFB method; and
a step of transmitting a notification signal that indicates that communications of the user equipment in the idle mode are to be restricted.
